# EUROPEAN PATENT SPECIFICATION

(11) **EP 3 389 366 B1**
(45) Date of publication and mention of the grant of the patent: **08.07.2020**
(21) Application number: 16815692.5
(22) Date of filing: 12.12.2016
(51) Int. Cl.: A01J 5/08

(54) **TEATCUP LINER WITH A SECURE COLLAPSE**
SICHERES EINKLAPPEN DES ZITZENGUMMIS
MANCHON TRAYEUR À AFFAISSEMENT STABLE

(30) Priority: 14.12.2015 SE 1551637; 14.12.2015 US 201514967407
(43) Date of publication of application: 24.10.2018
(73) Proprietor: DeLaval Holding AB, 147 21 Tumba (SE)
(72) Inventor: ÄLVEBY, Nils, 147 21 Tumba (SE)
(74) Representative: Lilliehorn, Tobias
(86) International application number: PCT/SE2016/051249
(87) International publication number: WO 2017/105321

(56) References cited:
- WO-A1-2011/002281
- DE-A1- 19 623 386
- DE-U- 1 990 081
- US-A- 3 289 634
- US-B1- 6 776 120
- US-B2- 8 820 263

## Description

### BACKGROUND OF THE INVENTION

The present invention provides a teatcup liner having a barrel that provides an enhanced teat massage and relieves congestion in the teat tissue during a milking operation. The teatcup liner is configured to be mounted in a shell of a teatcup to be applied to a teat of an animal for the milking operation.

The teatcup liner provides that during a liner collapse phase of the milking operation, as the atmosphere, or a sub-pressure less than the milking vacuum, is allowed into the pulsation chamber, a lower barrel part collapses creating an upward wave movement that securely collapses an upper barrel part of the teatcup liner against the teat and thereby avoids any chance of the barrel pressing lymphs downward as the barrel collapses.

### DISCUSSION OF THE PRIOR ART

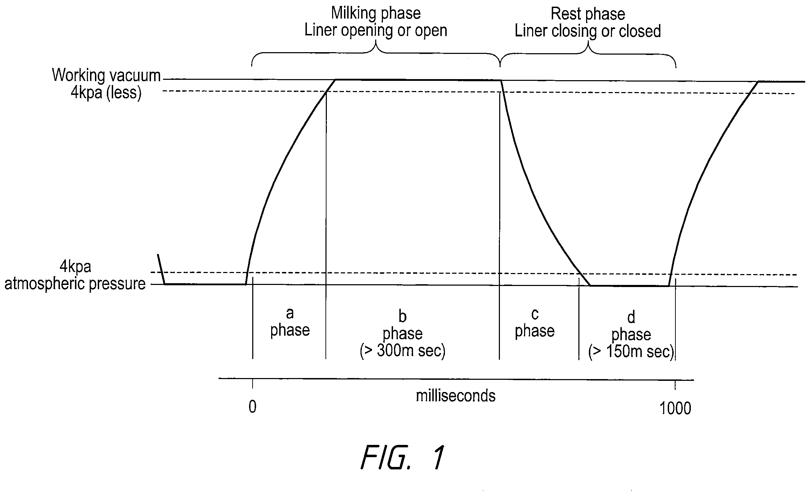

Figure 1 illustrates a cycle of the milking operation. During the milking operation, a vacuum level is applied to the inner space of the barrel which holds the teat and causes withdrawal of the milk. Additionally, vacuum and atmospheric pressure (or the sub-pressure) are cyclically applied to the pulsation chamber located between exterior surfaces of the barrel and the inner side of the shell so that the barrel cyclically collapses against the teat located inside the inner space of the barrel.

Phases A-B correspond to the milking phase where the teatcup liner is opening (phase A) or open (phase B). Phases C-D correspond to the relaxed phase where the liner is closing or closed. Phase C corresponds to the liner collapse phase where atmosphere, or a sub-pressure less than the milking vacuum, is allowed into the pulsation chamber such that the differential pressure across the barrel of the teatcup liner increases and causes the barrel to collapse onto the teat to provide a teat massage.

The benefits of teat massage are well known and different liner structures, having different cross-sectional shapes, have been provided with an eye toward positive teat massage.

US-2,687,112 discloses a teatcup liner comprising non-collapsible collar merged with a yieldable inflation sleeve to provide an inactive entrance zone which prevents undue and harmful massaging.

US-6,164,243 discloses a teatcup liner comprising a head end portion, a barrel, and an outlet tube. The barrel has a triangular shape with three corner portions and three side portions extending along the length of the barrel. Each of the side portions is curved or bulged outwardly in a relaxed state.

FR-953,779 discloses another teatcup comprising a shell and a teatcup liner, both having a triangular cross-section with outwardly curved or bulged side portions in a relaxed state.

Teatcup liners having a barrel with a triangular cross-sectional shape are advantageous in the sense that they are considered to result in a gentle teat treatment during the milking operation. A disadvantage of such triangular or polygonal teatcup liners is, however, that they do not sufficiently shut off the vacuum to the mouthpiece of the liner, resulting in a slower milking.

WO 2009/042022 discloses a teatcup liner having a barrel with a square cross-section.

EP-958 738 discloses a teatcup liner having a barrel with a wave-shape cross-section.

US 8,113,145 discloses a teatcup liner having a barrel with a round cross-section in its upper part portion and a square cross-section in its lower portion to obtain a uniform seal with minimal irritation in the upper portion of a teat and with reduced pressure applied to the lower portion of a teat. In the barrel square portion, one corner-to-corner dimension is greater than the other corner-to-corner dimension to provide different corner radiuses so that the square barrel portion collapses in a roughly diamond shape.

US 6,776,120 discloses teatcup liners of various thickness and with a barrel where at least one of the wall thickness and rib thickness varies as the barrel and the ribs extend axially.

US 8,820,263 discloses a liner with a barrel having a polygonal cross-sectional shape transversely to the longitudinal axis along the barrel which provides an efficient milking and secures a gentle treatment of the teat during the milking operation.

### SUMMARY OF THE INVENTION

The object of the present invention is to overcome problems of prior art teatcup liners and to provide a teatcup liner providing an efficient milking, and securing a gentle treatment of the teat during the milking operation, and in particular providing enhanced teat massage and relieving congestion in the teat tissue by assuring a secure collapse of the upper barrel part during the liner collapse phase of the milking operation.

In the present invention, during phase C of the milking operation, corresponding to the liner collapse phase where the barrel is initially in a non-collapsed condition, atmosphere, or a sub-pressure less than the milking vacuum, is allowed into the pulsation chamber such that the differential pressure across the barrel of the teatcup liner increases to cause a lower barrel part to collapse first such that the collapse of the lower barrel creates an upward wave movement of the lower barrel towards the upper barrel that securely collapses the upper barrel onto the teat to provide an enhanced teat massage and relieve congestion in the teat tissue. Additionally, the upward wave movement avoids any chance of the barrel pressing lymphs downward as the barrel collapses.

According to the invention, this object is achieved by the teatcup liner according to claim 1 including a polygonal cross-sectional shape barrel comprised of an upper barrel and a lower barrel, the length of the upper barrel being such that the upper barrel contains all of the teat or at least most of the teat during the milking operation and, during the milking operation, the teat does not extend or extend to a minor degree into the lower barrel; and where the lower barrel has a flexibility for closing during the liner collapse phase of the milking operation greater than a flexibility of the upper barrel such that corner portions of the lower barrel are weaker than the corner portions of the upper barrel thereby assuring the lower barrel collapses to create an upward wave movement of the lower barrel towards the upper barrel that securely collapses the upper barrel onto the teat to provide an enhanced teat massage and relieve congestion in the teat tissue. Advantageously, during each of the phases A-D, the teat fills up the inner space at least in a top region of the upper barrel.

The corner portions of the lower barrel may, for example, be made weaker by providing the corner portions of the lower barrel with a reduced thickness relative to the corner portions of the upper barrel, a smaller radius relative to the corner portions of the upper barrel, or by providing the corner portions of the lower barrel with hinge elements, e.g., notches.

Additionally, limiting the length of the lower barrel relative to the length of the whole barrel contributes to ensuring the upper barrel contains all of the teat or at least most of the teat during the milking operation and that the teat does not extend or extent to a minor degree into the lower barrel, as well as ensuring that during the liner collapse phase, the lower barrel collapses to create an upward wave movement towards the upper barrel that securely collapses the upper barrel onto the teat.

The inventive teatcup liner may be either a single-piece liner or a modular liner where the head, the barrel, and the outlet portion are each modules that connect to each other, either directly or indirectly, e.g., via a sensor element or other connector.

### BRIEF DESCRIPTION OF THE DRAWINGS

The present invention will now be explained more closely by description of various embodiments and with reference to the drawings attached hereto.
Figure 1 illustrates a cycle of the milking operation.
Figure 2 discloses a longitudinal cross-sectional side view of an example of a first-type embodiment of a teatcup liner according to the invention.
Figures 3-5 illustrate polygonal cross-sectional sections of the barrel along section lines 3-3, 4-4, and 5-5 of Figure 1.
Figures 6-7 illustrate polygonal cross-sectional sections of the barrel along section lines 3-3, and 4-4 of Figure 1 for a very short teat embodiment.
Figure 8 illustrates the teatcup liner mounted in a shell in a longitudinal sectional view.
Figures 9-11 illustrate polygonal cross-sectional sections of the barrel along section lines 3-3, 4-4, and 5-5 of Figure 8, in an embodiment having notches.

### Reference Numerals

- 1: teatcup liner
- 2: barrel
- 3: upper barrel
- 4: lower barrel
- 5: top part of barrel
- 6: bottom part of upper barrel
- 7: top part of lower barrel
- 8: inner space of barrel
- 9: interior surface within upper barrel
- 10: head
- 11: mouthpiece
- 12: upper collar region
- 13: head transition portion
- 14: bottom of head transition portion
- 15: outlet portion
- 16: bottom part of lower barrel
- 17: outlet transition portion
- 18: element co-operating with shell of teat cup
- 19: corner portions
- 20: side walls
- 21: exterior surface of corner portion
- 22: exterior surface of side wall
- 23: inner surface of corner portion
- 24: inner surface of side wall
- 25: shell
- 26: pulsation space
- 27: shell vacuum line connection
- 28: inner surface notch
- 29: exterior surface notch
- Tc: thickness of center part of corner portions 19
- Ts: thickness of a center part of side walls 20
- Lh: head length along the longitudinal axis (x)

### DETAILED DESCRIPTION OF VARIOUS EMBODIMENTS OF THE INVENTION

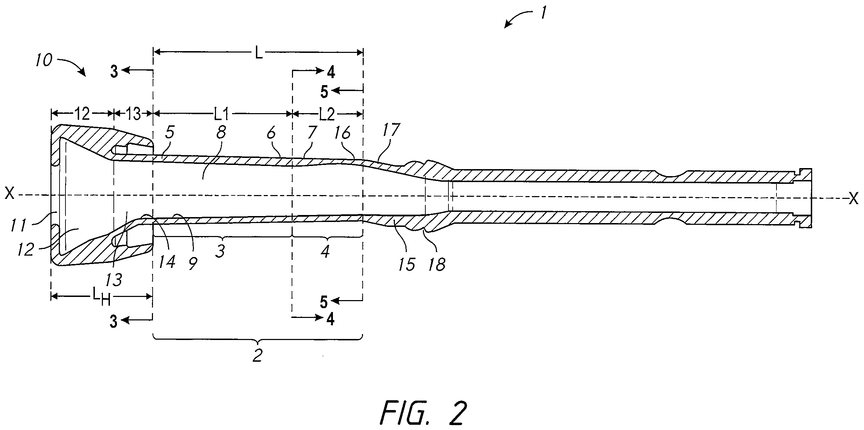

Figure 2 discloses a longitudinal cross-sectional side view of a first type embodiment of a teatcup liner 1 according to the invention. As shown, the liner 1 has a longitudinal shape extending along a longitudinal axis (x).

In all embodiments of the invention, the teatcup liner 1 includes a polygonal cross-sectional shaped barrel 2 comprised of an upper barrel 3 and a lower barrel 4.

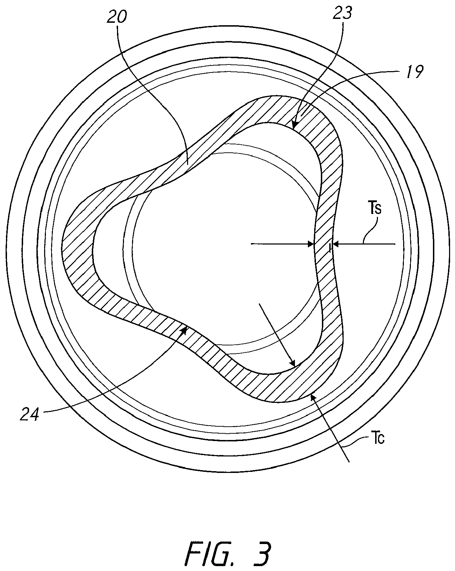

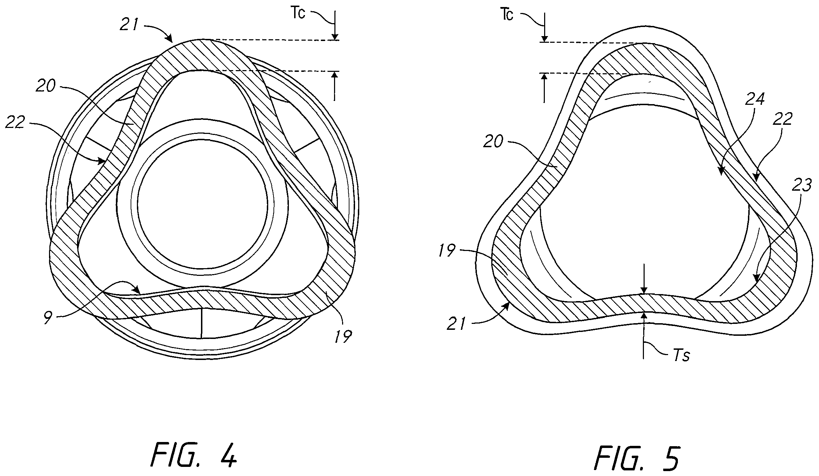

Figure 3 illustrates the polygonal cross-sectional section at a top part 5 of the upper barrel 3 along section line 3-3. Figure 4 illustrates the polygonal cross-sectional section along section line 4-4, where a bottom part 6 of the upper barrel 3 connects with a top part 7 of the lower barrel 4. Figure 5 illustrates the polygonal cross-sectional section along section line 5-5.

The barrel 2 defines an inner space 8 with an interior surface 9 within the upper barrel 3 for receiving the teat.

The upper barrel 3 has a first length (L1) extending from section line 3-3 to section line 4-4. The lower barrel 4 has a second length (L2) extending from section line 4-4 to section line 5-5. The barrel 2 has an overall length (L) extending between section line 3-3 and section line 5-5.

As the top part 7 of the lower barrel 4 is connected to the bottom part 6 of the upper barrel 3, the first and second lengths (L1, L2) together equal the overall length (L) of the barrel 2 and the barrel defines the inner space 8 with the interior surface 9 within the first length (L1) of the upper barrel 3 receiving the teat during the milking operation.

Advantageously, during each of the phases A-D of the milking operation, the teat fills up the inner space 8 of the upper barrel 3, at least at one cross-section region of the top part 5 of the upper barrel 3 thereby achieving a seal between the interior surface of the upper barrel 3 of teatcup liner and the teat.

Each embodiment includes a head 10 that defines a mouthpiece 11 through which the teat is inserted during the milking operation. The head 10 defines an upper collar region 12 joined to a head transition portion 13. The head 10 has a head length (Lh) along the longitudinal axis (x). As shown in Figure 2, the top part 5 of the barrel extends downward from a bottom 14 of the head transition portion 13.

In each embodiment, the head length (Lh) and the first length (L1) of the upper barrel 3 have, in a relaxed state, a combined length along the longitudinal axis (x) such that the head 10 and the upper barrel 3 contain all of the teat or at least most of the teat during the milking operation and that, during the milking operation, the teat does not extend or extend to a minor degree into the lower barrel 4.

In each embodiment, an outlet portion 15 extends downward from a bottom part 16 of the lower barrel 4 along the longitudinal axis (x). The outlet portion 15 includes an outlet transition portion 17 that connects to the bottom part 16 of the lower barrel 4 (shown at section line 5-5) and includes element 18 that co-operates with the shell of the teat cup by abutting against the shell. The outlet portion 15, at a region where the element 18 abuts the shell, is sufficient rigid to avoid collapse during all phases A-D of the milking operation.

As shown in Figures 3-5, the barrel, in the relaxed state, has transversely to the longitudinal axis (x), a polygonal cross-sectional shape comprised of corner portions 19 and side walls 20, each corner portion 19 connecting two of the side walls 20. Each corner portion 19 and each side wall 20 has a respective exterior surface 21, 22 and an opposite, inner surface 23, 24, with the inner surface 23 of each corner portion 19 being an arcuate first concave curvature open to the inner space.

In the embodiment of Figures 2-5, in the liner relaxed state, the upper barrel 3 and the lower barrel 4, transversely to the longitudinal axis (x), have the same polygonal cross-sectional shape comprised of the corner portions 19 and the side walls 20, each corner portion 19 connecting two of said side walls 20, each corner portion 19 and each side wall 20 having the exterior surface 21, 22 and the opposite, inner surface 23, 24, the inner surface 23 of each corner portion 19 being the arcuate first concave curvature open to the inner space 8.

As illustrated in Figures 3-5, a preferred embodiment provides the polygonal cross-sectional shape with only three corner portions 19, and only three side walls 20, the invention is not limited to this polygonal shape.

Although the embodiment shown in Figures 3-5 illustrates that this preferred embodiment provides the polygonal cross-sectional shape with only three corner portions, and only three side walls, the invention also includes a four sides/four corner portions polygonal shape embodiment.

For the upper barrel 3, each corner portion 19 has a first flexibility for closing such that during a liner collapse phase C of a milking operation the corner portions 19 close to the inner space 8 and the side walls 20 collapse towards the longitudinal axis (x) into the inner space 8 of the upper barrel 3.

For the lower barrel 4, each corner portion 19 has a second flexibility for closing such that during the liner collapse phase C of the milking operation, the corner portions 19 close to the inner space 8 and the side walls 20 collapse towards the longitudinal axis (x) into the inner space 8 of the lower barrel 4.

In all embodiments, the second flexibility is greater than the first flexibility such that the corner portions 19 of the lower barrel 4 are weaker than the corner portions 19 of the upper barrel 3. This assures that, where the barrel is initially in a non-collapsed condition, the lower barrel 4 collapses prior to the upper barrel 3 to create an upward wave movement of the lower barrel 4 towards the upper barrel 3 that securely collapses the upper barrel 3 towards the longitudinal axis (x) into the inner space 8 and onto the teat. This provides an enhanced teat massage and relieves congestion in the teat tissue.

In each embodiment, the second length (L2) of the lower barrel 4 is at least the 30% of the overall length (L) of the barrel 2 to further assure the lower barrel 4 collapses prior to the upper barrel 3 and creates the upward wave movement of the lower barrel 4 towards the upper barrel 3. Preferably, the second length (L2) of the lower barrel 4 is no more than 45% of the overall length (L) of the barrel 2 and more preferably, the second length (L2) of the lower barrel 4 is no more than 40% of the overall length (L) of the barrel 2.

The overall length (L) of the barrel 2, the first length (L1) of the upper barrel 3, and the head length (Lh) are selected based on expected teat length, including the extension of the teat that always occurs during the milking operation, so as to assure that the head 10 and the upper barrel 3 contain all of the teat or at least most of the teat during the milking operation and that, during the milking operation, the teat does not extend or extend to a minor degree into the lower barrel 4.

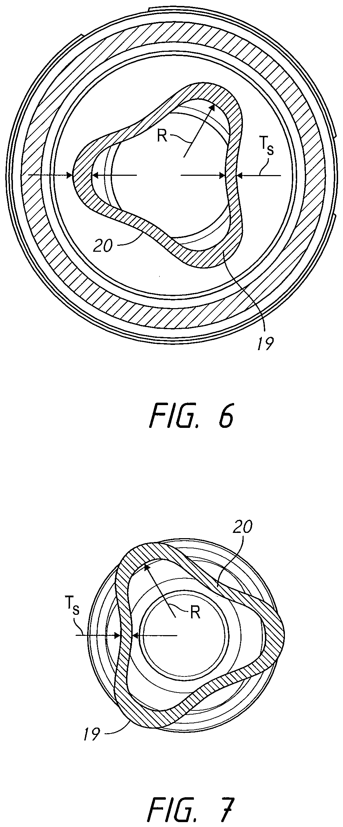

In most embodiments, a combined length of the head length (Lh) and the first length (L1) of the upper barrel 3 is in a range from 60 to 100 mm. In one embodiment suitable for very short teats, the head length (Lh) is 15.5 mm, and the combined length of the head length (Lh) and the first length (L1) of the upper barrel 3 is 85 mm. With reference to Figures 6-7, a radius (R) of the center of the corner portions 19 of the upper barrel 3 is 6 mm +/- .50 mm, more preferably 6 mm +/- .15 mm and a radius (R) of the center of the corner portions 19 of the lower barrel 4 is 5 mm +/- .30 mm, more preferably 5 mm +/- .15 mm.

In the first type embodiments of Figure 2, a thickness (Ts) of a center part of the side walls 20 along the upper barrel 3 is equal to a thickness (Ts) of a center part of the side walls 20 along the lower barrel 4 from the top part 7 of the lower barrel 4 to the bottom part 16 of the lower barrel 4.

In contrast, a thickness (Tc) of a center part of the corner portions 19 remains constant in the upper barrel 3 down to the bottom part 6 of the upper barrel 3, and then the thickness (Tc) of a center part of the corner portions 19 decreases, from the top part 7 of the lower barrel 4 to the bottom part 16 of the lower barrel 4 with:
i) a thickness (Tc) of a center part of the corner portions 19 along the bottom part 6 of the upper barrel 3 being equal to the thickness (Tc) of the center part of the corner portions 19 of the top part 7 of the lower barrel 4, and
ii) the thickness (Tc) of the center part of the corner portions 19 along the bottom part 6 of the upper barrel 3 being greater than the thickness (Tc) of the center part of the corner portions 19 along the bottom part 16 of the lower barrel 4 by at least 25%.

In such embodiments, the thickness (Ts) of the center part of the side walls 20 along the upper barrel 3 and the lower barrel 4 may be 1.75 mm +/- .20 mm, while the thickness (Tc) of the center part of the corner portions 19 along the upper barrel may be 3 mm +/- .15 mm.

More preferably, the thickness (Tc) of the center part of the corner portions 19 along the bottom part 6 of the upper barrel 3 is greater than the thickness (Tc) of the center part of the corner portions 19 along the bottom part 16 of the lower barrel 4 by at least 30% and no more than 75%.

In preferred embodiments the thickness (Tc) of the center part of the corner portions 19 along the of the top part 7 of the lower barrel 4 may be 3 mm, whereas the thickness (Tc) of the center part of the corner portions 19 along the bottom part 16 of the lower barrel 4 may be a range from 1.74 mm through 2.3 mm.

In some of these preferred embodiments, the thickness of the center part (Tc) of the corner portions 19 along the bottom part 6 of the upper barrel 3 is greater than the thickness (Tc) of the center part of the corner portions 19 along the bottom part 16 of the lower barrel 4 by at least 60%.

In some particular embodiments, at the top part 5 of the upper barrel 3, a radius of the corner portions 19 may be 5.85 mm +/- .30 mm, more preferably 5.85 mm +/- .15 mm, the thickness (Ts) of the center part of the side walls along the upper barrel 3 and the lower barrel 4 may be 1.80 mm +/- .20 mm, more preferably 1.8 mm +/- .15 mm, the thickness (Tc) of the center part of the corner portions 19 along the lower barrel 4 may be no more than 2.3 mm +/- .20 mm., more preferably 2.3 mm +/- .15 mm. At the bottom part 16 of the lower barrel 4, the radius of the corner portions 19 may be 4.65 mm +/- .30 mm., more preferably 4.65 mm +/- .15 mm.

In other particular embodiments, at the top part 5 of the upper barrel 3, a radius of the corner portions 19 may be 5.85 mm +/- .30 mm., more preferably 5.85 mm +/- .15 mm; however, the thickness (Ts) of the center part of the side walls 20 along the upper barrel 3 and the lower barrel 4 may be 1.7 mm +/- .25 mm, the thickness (Tc) of the center part of the corner portions 19 along the lower barrel 4 may be no more than 1.74 mm +/- .25 mm, and at the bottom part 16 of the lower barrel 4, the radius of the corner portions 19 varies along the inner surface 23 with a smallest radius being 2.49 mm +/- .20 mm., more preferably 2.49 mm +/- .15 mm at the center of the inner surface 23.

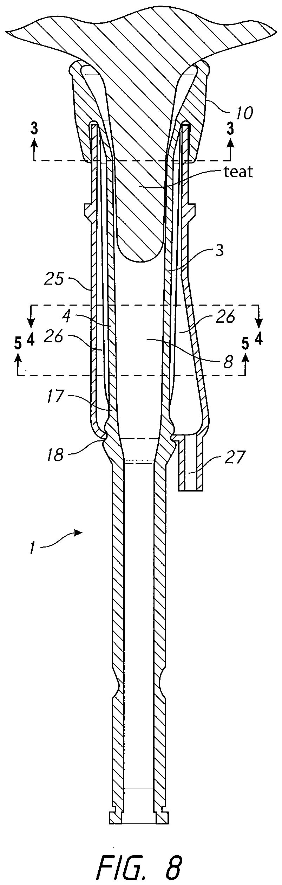

Figure 8 illustrates the teatcup liner 1 mounted in a shell 25 in a longitudinal sectional view. Element 18 of the outlet transition portion 17 is shown co-operating with the shell 25 by having the teatcup liner 1 abut against the shell 25. Additionally, the outlet portion 15, at the region where the element 18 abuts the shell, is sufficient rigid to avoid collapse during all phases A-D of the milking operation.

With the teatcup liner 1 mounted in the shell 25, the shell 25 defines a pulsation space 26 between an interior of the shell and an exterior of the teatcup liner 1. The shell 25 has a vacuum line connection 27. As shown, the teatcup liner 1 is mounted in the shell 25 with the head 10 bearing against the top of the shell 25, and element 18 of the outlet portion 15 co-operating with the shell 25 by abutting against a lower part of the shell 25.

The barrel 2 is tapered along the overall length (L) from the head 10 to the outlet portion 15. In this embodiment, neither the head 10 nor the barrel 2 have a vent (air inlet).

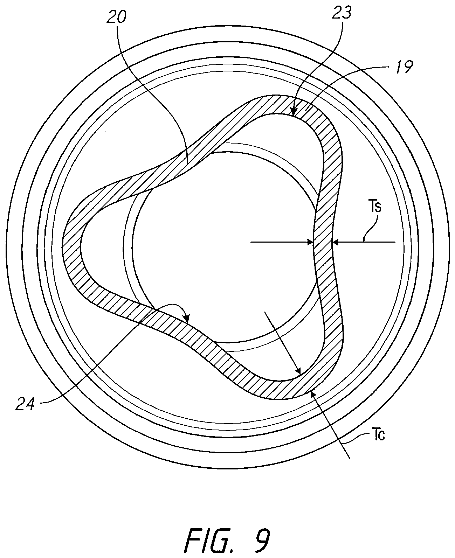

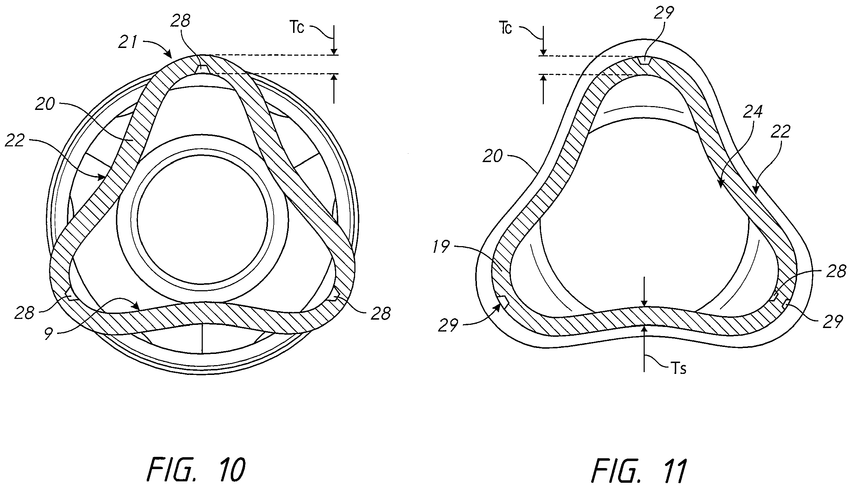

Figure 8 also represents a longitudinal cross-sectional side view of a second type embodiment of a teatcup liner according to the invention. Figures 9-11 illustrate polygonal cross-sectional sections of the barrel along section lines 3-3, 4-4, and 5-5 of Figure 8. In general, the elements and features of the second type embodiments are the same as in the first type embodiment with differences discussed below.

In the second type embodiments, each corner portion 19 of the upper barrel 3 has the first flexibility for closing such that during a liner collapse phase C of a milking operation, the corner portions 19 close to the inner space 8 and the side walls 20 collapse towards the longitudinal axis (x) into the inner space 8 of the upper barrel 3.

However, in the lower barrel 4 there are provided notches 28, 29 such that the notches 28, 29 result in each corner portion 19 of the lower barrel 4 having the second flexibility for closing such that during the liner collapse phase C of the milking operation the corner portions 19 of the lower barrel 4 close to the inner space 8 of the lower portion 4, and the side walls 20 collapse towards the longitudinal axis (x) into the inner space 8 of the lower barrel 4. Again, as in the first type embodiments, the second flexibility is greater than the first flexibility such that the corner portions 19 of the lower barrel 4 are weaker than the corner portions 19 of the upper barrel 3, thereby assuring the lower barrel 4 collapses prior to the upper barrel 3 to create the upward wave movement of the lower barrel 4 towards the upper barrel 3 that securely collapses the upper barrel 3 onto the teat. The notches may be, e.g., V-shaped notches or U-shaped notches with squared or rounded inside corners.

In the second type embodiments, at least two of the corner portions 19 of the lower barrel 4 comprise a notch 28, 29 running along a longitudinal direction of the lower barrel 4 on at least one of the exterior surface 21 and the inner surface 23 of the two corner portions 19 of the lower barrel 4, each notch 28, 29 providing a hinge to the corresponding corner portions 19.

In all the second type embodiments, all of the corner portions of the upper barrel are free of any notch running along the longitudinal direction on both the exterior surface 21 and the inner surface 23 of the corner portions 19 of the upper barrel 3.

In second type embodiments, the notch of each of the two corner portions 19 of the lower barrel 4 is an interior notch 28 that runs along the longitudinal direction on the inner surface 23 of the two corner portions 19 of the lower barrel 4.

In other some second type embodiments, the notch of each of the two of the corner portions 19 of the lower barrel 4 is an exterior notch 29 that runs along the longitudinal direction on the exterior surface 21 of the two corner portions 19 of the lower barrel 4.

In the second type embodiments having the notches 28, 29, each of the side walls 20 and the corner portions 19 of the upper barrel 3 and of the lower barrel 4 have a same thickness transverse to the longitudinal axis (x), except at the notches 28, 29. That is, Tc = Ts in the lower barrel 4 of the second embodiment.

In preferred embodiments of the second type, each of the corner portions 19 of the lower barrel 4 comprise the notch 28, 29, the notch being located at a center part of each corner portion 19 of the lower barrel 4 and extending 30% to 60% into a thickness of the center part of each corner portion 19 of the lower barrel 4.

In some preferred "double notch" embodiments, each corner portion 19 of the lower barrel 4 comprise first and second notches (28, 29) located at the center part of each corner portion 19 of the lower barrel 4 and running along a longitudinal direction of the lower barrel 4, the first notch being an interior notch 28 on the interior surface 23 and the second notch being an exterior notch 29 on the exterior surface 21 of the corner portions 19 of the lower barrel 4, each notch 28, 29 providing a hinge to the corresponding corner portions 19.

In these "double notch" embodiments, each notch 28, 29 extends 15-30% into a thickness of the center part of each corner portion 19 of the lower barrel 4. As with all the second type embodiments, all of the corner portions are free of any notch running along the longitudinal direction of the upper barrel on both of the exterior surface and the inner surface of the corner portions at the center part of the corner portions of the upper barrel.

As with the first type embodiments, the second length (L2) of the lower barrel 4 is at least the 30% of the overall length (L) of the barrel 2; preferably the second length (L2) of the lower barrel is no more than 45% of the overall length of the barrel (L); and more preferably the second length (L2) of the lower barrel is no more than 40% of the overall length of the barrel (L).

In the above-discussed embodiments, the teatcup liner may be a modular liner where the head 10, the barrel 2, and the outlet portion 15 are each modules that connect to each other, either directly or indirectly, e.g., the barrel 2 connects to the head 10 at section line 3-3 and to the outlet portion 15 at section line 5. For the interpretation of the claims, the term "relaxed state" refers to the state when the teatcup liner is not mounted in the shell of the teatcup and thus not subjected to any external forces at all. However, "relaxed state" may also refer to the state when the teatcup liner is mounted in the shell of the teatcup, and not subjected to any further external forces other than from the tensioning resulting from the mounting of the teatcup liner in the shell of the teatcup. In any case, the teatcup liner is not subjected to, for instance, a milking vacuum or a pulsating vacuum in the "relaxed state", or to the forces or pressures arising when the teat is introduced into the inner space of the teatcup liner.

## Claims

1. A teatcup liner (1) configured to be mounted in a shell of a teatcup and to be applied to a teat of an animal, with a pulsation chamber between the liner and an inner side of the shell being connected to vacuum and atmospheric pressure, or a sub-pressure less than the milking vacuum, in a cyclic manner during a milking operation, the liner having a longitudinal shape extending along a longitudinal axis (x), the teatcup liner comprising:
a barrel (2) having a top (5) that extends downward,
wherein the barrel is comprised of i) an upper barrel (3) of a first length (L1), and ii) a lower barrel (4) of a second length (L2), where the first and second lengths (L1, L2) together equal the overall length (L) of the barrel, and a top part (7) of the lower barrel is connected to a bottom part (6) of the upper barrel (3), the barrel defines an inner space (8) with an interior surface (9) within the upper barrel (3) for receiving the teat,
wherein, during the milking operation, the teat does not extend or extend to a minor degree into the lower barrel,
wherein the barrel, in the relaxed state, has transversely to the longitudinal axis (x), a polygonal cross-sectional shape comprised of corner portions (19) and side walls (20), each corner portion connecting two of said side walls, each corner portion and each side wall having an exterior surface and an opposite, inner surface, the inner surface of each corner portion being an arcuate first concave curvature open to the inner space,
wherein, for the upper barrel, each corner portion has a first flexibility for closing such that during a liner collapse phase of a milking operation the corner portions close to the inner space and the side walls collapse towards the longitudinal axis (x) into the inner space of the upper barrel, and
wherein, for the lower barrel, each corner portion has a second flexibility for closing such that during the liner collapse phase of the milking operation the corner portions close to the inner space and the side walls collapse towards the longitudinal axis (x) into the inner space of the lower barrel, **characterized in that** the second flexibility is greater than the first flexibility such that the corner portions of the lower barrel are weaker than the corner portions of the upper barrel, thereby assuring the lower barrel collapses prior to the upper barrel to create an upward wave movement of the lower barrel towards the upper barrel that collapses the upper barrel onto the teat.

2. The teatcup liner of claim 1, further comprising:
a head (10) defining a mouthpiece (11) through which the teat is inserted during the milking operation, the head defining an upper collar region (12) joined to a head transition portion (13) and having a head length (Lh) along the longitudinal axis (x),
wherein the barrel (2) is connected to the head (10) and the top (5) of the barrel (2) extends downward from a bottom of the head transition portion,
wherein the head length (Lh) and the first length of the upper barrel have, in the relaxed state, a combined length along the longitudinal axis (x) such that the head and the upper barrel contain all of the teat or at least most of the teat during the milking operation and that, during the milking operation, the teat does not extend or extend to a minor degree into the lower barrel; and
an outlet portion (15) connected to and extending downward from a bottom part (16) of the lower barrel along the longitudinal axis (x), the outlet portion (15) including an outlet transition portion (17) that connects to the bottom part (16) of the lower barrel (4) and includes an element (18) that co-operate with the shell of the teat cup.

3. The teatcup liner of claim 1, wherein,
a thickness of a center part of the side walls along the upper barrel is equal to a thickness of a center part of the side walls along the lower barrel from the top part of the lower barrel to the bottom part of the lower barrel,
a thickness of a center part of the corner portions remains constant in the upper barrel down to the bottom part of the upper barrel, and then the thickness of a center part of the corner portions decreases, from the top part of the lower barrel to the bottom part of the lower barrel with:
i) a thickness of a center part of the corner portions along the bottom part of the upper barrel being equal to the thickness of the center part of the corner portions of the top part of the lower barrel, and
ii) the thickness of the center part of the corner portions along the bottom part of the upper barrel being greater than the thickness of the center part of the corner portions along the bottom part of the lower barrel by at least 25%.

4. The teatcup liner of claim 3, wherein the thickness of the center part of the corner portions along the bottom part of the upper barrel being greater than the thickness of the center part of the corner portions along the bottom part of the lower barrel by at least 60%.

5. The teatcup liner of claim 3, wherein,
the thickness of the center part of the side walls along the upper barrel and the lower barrel is 1.75 mm +/- .20 mm, and
the thickness of the center part of the corner portions along the upper barrel is 3 mm +/- .15 mm.

6. The teatcup liner of claim 4, wherein,
at the top of the upper barrel, a radius of the corner portions is 5.85 mm +/- .30,
the thickness of the center part of the side walls along the upper barrel and the lower barrel is 1.7 mm +/- .25 mm,
the thickness of the center part of the corner portions along the lower barrel is no more than 1.74 mm +/- .25 mm, and
at the bottom part of the lower barrel, the radius of the corner portions varies with a smallest radius of 2.49 mm +/- .20 mm at center of the inner surface.

7. The teatcup liner according to claim 1, wherein, the polygonal cross-sectional shape defines only three corner portions, and only three side walls.

8. The teatcup liner of claim 2 in combination with the teatcup, wherein,
the teatcup comprising a shell that defines a pulsation space between an interior of the shell and an exterior of the teatcup liner, the shell having a vacuum line connection,
the teatcup liner is mounted in the shell with the shell bearing against the head and the outlet portion,
the barrel is tapered along the overall length (L) from the head to the outlet portion, and
the head and the barrel are each vent-free.

9. The teatcup liner according to claim 1, wherein, when located within the polygonal cross-sectional shape of the upper barrel, the teat fills up the inner space during all pulsation phases (a, b, c, d) during the milking operation with the interior surface (25) sealed against the teat.

10. The teatcup liner of claim 1, wherein, in the liner relaxed state, the upper barrel and the lower barrel, transversely to the longitudinal axis (x), have the same polygonal cross-sectional shape comprised of the corner portions and the side walls, each corner portion connecting two of said side walls, each corner portion and each side wall having an exterior surface and the opposite, inner surface, the inner surface of each corner portion being the arcuate first concave curvature open to the inner space.

11. The teatcup liner of claim 2, wherein a combined length of the head length (Lh) and the first length of the upper barrel, in the relaxed state, is in a range from 60 to 100 mm.

12. The teatcup liner of claim 11, wherein,
the second length (L2) of the lower barrel is at least the 30% of the overall length of the barrel (L).

13. The teatcup liner of claim 1, wherein,
the second length (L2) of the lower barrel is at least the 30% of the overall length of the barrel (L).

14. The teatcup liner of claim 13, wherein,
the second length (L2) of the lower barrel is no more than 45% of the overall length of the barrel (L).

15. The teatcup liner of claim 13, wherein,
the second length (L2) of the lower barrel is no more than 40% of the overall length of the barrel (L).

## Patentansprüche

1. Zitzenbecherauskleidung (1), die konfiguriert ist, um in einer Hülle eines Zitzenbechers befestigt zu werden und um an eine Zitze eines Tieres angelegt zu werden, wobei eine Pulsationskammer zwischen der Auskleidung und einer inneren Seite der Hülle mit Vakuum und Umgebungsdruck oder einem Unterdruck, der geringer ist als das Melkvakuum, auf eine zyklische Weise während eines Melkvorgangs verbunden ist, wobei die Auskleidung eine Längsform aufweist, die sich entlang einer Längsachse (x) erstreckt, wobei die Zitzenbecherauskleidung Folgendes umfasst:
einen Zylinder (2) mit einer Oberseite (5), die sich nach unten erstreckt,
wobei der Zylinder aus i) einem oberen Zylinder (3) einer ersten Länge (L1) und ii) einem unteren Zylinder (4) einer zweiten Länge (L2) besteht, wobei die erste und die zweite Länge (L1, L2) zusammen der Gesamtlänge (L) des Zylinders entsprechen, und wobei ein Oberseitenteil (7) des unteren Zylinders mit einem Bodenteil (6) des oberen Zylinders (3) verbunden ist, wobei der Zylinder einen inneren Raum (8) mit einer Innenoberfläche (9) innerhalb des oberen Zylinders (3) zum Aufnehmen der Zitze definiert,
wobei sich die Zitze während des Melkvorgangs nicht erstreckt oder nur geringfügig in den unteren Zylinder erstreckt,
wobei der Zylinder in dem entspannten Zustand quer zu der Längsachse (x) eine polygonale Querschnittsform aufweist, die aus Eckabschnitten (19) und Seitenwänden (20) besteht, wobei jeder Eckabschnitt zwei der Seitenwände verbindet, wobei jeder Eckabschnitt und jede Seitenwand eine Außenoberfläche und eine gegenüberliegende, innere Oberfläche aufweist, wobei die innere Oberfläche jedes Eckabschnitts eine bogenförmige erste konkave Krümmung ist, die zu dem inneren Raum hin offen ist,
wobei für den oberen Zylinder jeder Eckabschnitt eine erste Flexibilität zum Schließen derart aufweist, dass während einer Auskleidungszusammenfallphase eines Melkvorgangs die Eckabschnitte zu dem inneren Raum hin schließen und die Seitenwände in Richtung der Längsachse (x) in den inneren Raum des oberen Zylinders zusammenfallen, und
wobei jeder Eckabschnitt für den unteren Zylinder eine zweite Flexibilität zum Schließen derart aufweist, dass während der Auskleidungszusammenfallphase des Melkvorgangs die Eckabschnitte zu dem inneren Raum hin schließen und die Seitenwände in Richtung der Längsachse (x) in den inneren Raum des unteren Zylinders zusammenfallen,
**dadurch gekennzeichnet, dass** die zweite Flexibilität derart über der ersten Flexibilität liegt, dass die Eckabschnitte des unteren Zylinders schwächer als die Eckabschnitte des oberen Zylinders sind, wobei dadurch sichergestellt wird, dass der untere Zylinder vor dem oberen Zylinder zusammenfällt, um eine Wellenbewegung des unteren Zylinders nach oben in Richtung des oberen Zylinders zu erzeugen, die den oberen Zylinder auf die Zitze zusammenfallen lässt.

2. Zitzenbecherauskleidung nach Anspruch 1, ferner Folgendes umfassend:
einen Kopf (10), der ein Mundstück (11) definiert, durch das die Zitze während des Melkvorgangs eingeführt wird, wobei der Kopf einen oberen Kragenbereich (12) definiert, der mit einem Kopfübergangsabschnitt (13) aneinandergefügt ist und eine Kopflänge (Lh) entlang der Längsachse (x) aufweist,
wobei der Zylinder (2) mit dem Kopf (10) verbunden ist und die Oberseite (5) des Zylinders (2) sich von einem Boden des Kopfübergangsabschnitts nach unten erstreckt,
wobei die Kopflänge (Lh) und die erste Länge des oberen Zylinders in dem entspannten Zustand eine kombinierte Länge entlang der Längsachse (x) derart aufweisen, dass der Kopf und der obere Zylinder die gesamte Zitze oder wenigstens den Großteil der Zitze während des Melkvorgangs enthalten und dass sich die Zitze während des Melkvorgangs nicht erstreckt oder nur in geringem Maße in den unteren Zylinder erstreckt; und
einen Auslassabschnitt (15), der mit einem Bodenteil (16) des unteren Zylinders verbunden ist und sich von diesem entlang der Längsachse (x) nach unten erstreckt, wobei der Auslassabschnitt (15) einen Auslassübergangsabschnitt (17) beinhaltet, der sich mit dem Bodenteil (16) des unteren Zylinders (4) verbindet und ein Element (18) beinhaltet, das mit der Hülle des Zitzenbechers zusammenwirkt.

3. Zitzenbecherauskleidung nach Anspruch 1, wobei
eine Dicke eines Mittelteils der Seitenwände entlang des oberen Zylinders gleich einer Dicke eines Mittelteils der Seitenwände entlang des unteren Zylinders von dem Oberseitenteil des unteren Zylinders zu dem Bodenteil des unteren Zylinders ist,
eine Dicke eines Mittelteils der Eckabschnitte in dem oberen Zylinder bis hinunter zu dem Bodenteil des oberen Zylinders konstant bleibt und dann die Dicke eines Mittelteils der Eckabschnitte von dem Oberseitenteil des unteren Zylinders zu dem Bodenteil des unteren Zylinders mit Folgendem abnimmt:
i) eine Dicke eines Mittelteils der Eckabschnitte entlang des Bodenteils des oberen Zylinders ist gleich der Dicke des Mittelteils der Eckabschnitte des Oberseitenteils des unteren Zylinders, und
ii) die Dicke des Mittelteils der Eckabschnitte entlang des Bodenteils des oberen Zylinders ist um wenigstens 25 % größer als die Dicke des Mittelteils der Eckabschnitte entlang des Bodenteils des unteren Zylinders.

4. Zitzenbecherauskleidung nach Anspruch 3, wobei die Dicke des Mittelteils der Eckabschnitte entlang des Bodenteils des oberen Zylinders um wenigstens 60 % größer als die Dicke des Mittelteils der Eckabschnitte entlang des Bodenteils des unteren Zylinders ist.

5. Zitzenbecherauskleidung nach Anspruch 3,
wobei die Dicke des Mittelteils der Seitenwände entlang des oberen Zylinders und des unteren Zylinders 1,75 mm +/- 0,20 mm beträgt und
die Dicke des Mittelteils der Eckabschnitte entlang des oberen Zylinders 3 mm +/-0,15 mm beträgt.

6. Zitzenbecherauskleidung nach Anspruch 4, wobei
an der Oberseite des oberen Zylinders ein Radius der Eckabschnitte 5,85 mm +/-0,30 mm beträgt,
die Dicke des Mittelteils der Seitenwände entlang des oberen Zylinders und des unteren Zylinders 1,7 mm +/- 0,25 mm beträgt,
die Dicke des Mittelteils der Eckabschnitte entlang des unteren Zylinders nicht mehr als 1,74 mm +/- 0,25 mm beträgt und
an dem Bodenteil des unteren Zylinders der Radius der Eckabschnitte mit einem kleinsten Radius von 2,49 mm +/- 0,20 mm in der Mitte der inneren Oberfläche variiert.

7. Zitzenbecherauskleidung nach Anspruch 1, wobei die polygonale Querschnittsform nur drei Eckabschnitte und nur drei Seitenwände definiert.

8. Zitzenbecherauskleidung nach Anspruch 2 in Kombination mit dem Zitzenbecher, wobei
der Zitzenbecher eine Hülle umfasst, die einen Pulsationsraum zwischen einer Innenseite der Hülle und einer Außenseite der Zitzenbecherauskleidung definiert, wobei die Hülle eine Vakuumleitungsverbindung aufweist,
die Zitzenbecherauskleidung derart in der Hülle befestigt ist, dass die Hülle gegen den Kopf und den Auslassabschnitt anliegt,
der Zylinder entlang der Gesamtlänge (L) von dem Kopf zu dem Auslassabschnitt verjüngt ist, und
der Kopf und der Zylinder jeweils ohne Entlüftung sind.

9. Zitzenbecherauskleidung nach Anspruch 1, wobei die Zitze, wenn sie sich innerhalb der polygonalen Querschnittsform des oberen Zylinders befindet, den inneren Raum während aller Pulsationsphasen (a, b, c, d) während des Melkvorgangs ausfüllt, wobei die Innenoberfläche (25) gegen die Zitze versiegelt ist.

10. Zitzenbecherauskleidung nach Anspruch 1, wobei in dem entspannten Zustand der Auskleidung der obere Zylinder und der untere Zylinder quer zu der Längsachse (x) die gleiche polygonale Querschnittsform aufweisen, die aus den Eckabschnitten und den Seitenwänden besteht, wobei jeder Eckabschnitt zwei der Seitenwände verbindet, wobei jeder Eckabschnitt und jede Seitenwand eine Außenoberfläche und die gegenüberliegende, innere Oberfläche aufweist, wobei die innere Oberfläche jedes Eckabschnitts die bogenförmige erste konkave Krümmung ist, die zu dem inneren Raum hin offen ist.

11. Zitzenbecherauskleidung nach Anspruch 2, wobei eine kombinierte Länge der Kopflänge (Lh) und der ersten Länge des oberen Zylinders in dem entspannten Zustand in einem Bereich von 60 bis 100 mm liegt.

12. Zitzenbecherauskleidung nach Anspruch 11, wobei die zweite Länge (L2) des unteren Zylinders wenigstens 30 % der Gesamtlänge des Zylinders (L) beträgt.

13. Zitzenbecherauskleidung nach Anspruch 1, wobei die zweite Länge (L2) des unteren Zylinders wenigstens 30 % der Gesamtlänge des Zylinders (L) beträgt.

14. Zitzenbecherauskleidung nach Anspruch 13, wobei die zweite Länge (L2) des unteren Zylinders nicht mehr als 45 % der Gesamtlänge des Zylinders (L) beträgt.

15. Zitzenbecherauskleidung nach Anspruch 13, wobei die zweite Länge (L2) des unteren Zylinders nicht mehr als 40 % der Gesamtlänge des Zylinders (L) beträgt.

## Revendications

1. Manchon-trayeur (1) conçu pour être monté dans une coque d'un gobelet trayeur et pour être appliqué sur un trayon d'un animal, doté d'une chambre de pulsation entre le manchon et un côté interne de la coque étant reliée au vide et à une pression atmosphérique ou à une sous-pression inférieure au vide de traite, de manière cyclique pendant une traite, le manchon ayant une forme longitudinale s'étendant le long d'un axe longitudinal (x), le manchon-trayeur comprenant :
un cylindre (2) ayant un sommet (5) qui s'étend vers le bas,
le cylindre étant composé de i) un cylindre supérieur (3) d'une première longueur (L1), et ii) un cylindre inférieur (4) d'une seconde longueur (L2), où les première et seconde longueurs (L1, L2) sont ensemble égales à la longueur totale (L) du cylindre, et une partie supérieure (7) du cylindre inférieur est reliée à une partie inférieure (6) du cylindre supérieur (3), le cylindre définit un espace interne (8) avec une surface intérieure (9) à l'intérieur du cylindre supérieur (3) pour la réception du trayon,
dans lequel, pendant la traite, le trayon ne s'étend pas ou s'étend dans une faible mesure dans le cylindre inférieur,
dans lequel le cylindre, à l'état relâché, présente transversalement, vers l'axe longitudinal (x), une forme en coupe transversale polygonale composée de parties d'angle (19) et de parois latérales (20), chaque partie d'angle reliant deux desdites parois latérales, chaque partie d'angle et chaque paroi latérale ayant une surface extérieure et une surface interne opposées, la surface interne de chaque partie d'angle étant une première courbure concave arquée ouverte sur l'espace interne,
dans lequel, pour le cylindre supérieur, chaque partie d'angle présente une première flexibilité de fermeture de telle sorte que pendant une phase d'affaissement du manchon d'une traite, les parties d'angle proches de l'espace interne et les parois latérales s'affaissent vers l'axe longitudinal (x) dans l'espace interne du cylindre supérieur, et
dans lequel, pour le cylindre inférieur, chaque partie d'angle présente une seconde flexibilité pour la fermeture de telle sorte que pendant la phase d'affaissement du manchon de la traite, les parties d'angle proches de l'espace interne et les parois latérales s'affaissent vers l'axe longitudinal (x) dans l'espace interne du cylindre inférieur, **caractérisé en ce que** la seconde flexibilité est supérieure à la première flexibilité de telle sorte que les parties d'angle du cylindre inférieur sont inférieures que les parties d'angle du cylindre supérieur, assurant ainsi que le cylindre inférieur s'affaisse avant le cylindre supérieur pour créer un mouvement ondulatoire ascendant du cylindre inférieur vers le cylindre supérieur qui affaisse le cylindre supérieur sur le trayon.

2. Manchon-trayeur selon la revendication 1, comprenant en outre :
une tête (10) définissant une embouchure (11) à travers lequel le trayon est inséré pendant la traite, la tête définissant une région de collier supérieur (12) raccordée à une partie de transition de tête (13) et ayant une longueur de tête (Lh) le long l'axe longitudinal (x),
dans lequel le cylindre (2) est relié à la tête (10) et le sommet (5) du cylindre (2) s'étend vers le bas à partir du bas de la partie de transition de tête,
dans lequel la longueur de la tête (Lh) et la première longueur du cylindre supérieur ont, à l'état relâché, une longueur combinée le long de l'axe longitudinal (x) de telle sorte que la tête et le cylindre supérieur contiennent tout le trayon ou au moins la partie principale du trayon pendant la traite et que, pendant la traite, le trayon ne s'étend pas ou s'étend dans une faible mesure dans le cylindre inférieur ; et
une partie de sortie (15) reliée à et s'étendant vers le bas à partir d'une partie inférieure (16) du cylindre inférieur le long de l'axe longitudinal (x), la partie de sortie (15) comportant une partie de transition de sortie (17) qui se relie à la partie inférieure (16) du cylindre inférieur (4) et comporte un élément (18) qui coopère avec la coque du gobelet trayeur.

3. Manchon-trayeur selon la revendication 1,
dans lequel une épaisseur d'une partie centrale des parois latérales le long du cylindre supérieur est égale à une épaisseur d'une partie centrale des parois latérales le long du cylindre inférieur à partir de la partie supérieure du cylindre inférieur à la partie inférieure du cylindre inférieur,
une épaisseur d'une partie centrale des parties d'angle reste constante dans le cylindre supérieur jusqu'à la partie inférieure du cylindre supérieur, puis l'épaisseur d'une partie centrale des parties d'angle diminue à partir de la partie supérieure du cylindre inférieur vers la partie inférieure du cylindre inférieur avec :
i) une épaisseur d'une partie centrale des parties d'angle le long de la partie inférieure du cylindre supérieur étant égale à l'épaisseur de la partie centrale des parties d'angle de la partie supérieure du cylindre inférieur, et
ii) l'épaisseur de la partie centrale des parties d'angle le long de la partie inférieure du cylindre supérieur étant supérieure d'au moins 25 % à l'épaisseur de la partie centrale des parties d'angle le long de la partie inférieure du cylindre inférieur.

4. Manchon-trayeur selon la revendication 3, dans lequel l'épaisseur de la partie centrale des parties d'angle le long de la partie inférieure du cylindre supérieur étant supérieure d'au moins 60 % à l'épaisseur de la partie centrale des parties d'angle le long de la partie inférieure du cylindre inférieur.

5. Manchon-trayeur selon la revendication 3,
dans lequel l'épaisseur de la partie centrale des parois latérales le long du cylindre supérieur et du cylindre inférieur est de 1,75 mm + / - 0,20 mm, et l'épaisseur de la partie centrale des parties d'angle le long du cylindre supérieur sont de 3 mm + / - 0,15 mm.

6. Manchon-trayeur selon la revendication 4,
dans lequel, en haut du cylindre supérieur, un rayon des parties d'angle est de 5,85 mm + / - 0,30,
l'épaisseur de la partie centrale des parois latérales le long du cylindre supérieur et du cylindre inférieur est de 1,7 mm + / - 0,25 mm,
l'épaisseur de la partie centrale des parties d'angle le long du cylindre inférieur ne dépasse pas 1,74 mm + / - 0,25 mm,
et au niveau de la partie inférieure du cylindre inférieur, le rayon des parties d'angle varie avec un plus petit rayon de 2,49 mm + / - 0,20 mm au centre de la surface interne.

7. Manchon-trayeur selon la revendication 1, dans lequel la forme en coupe transversale polygonale définit uniquement trois parties d'angle et uniquement trois parois latérales.

8. Manchon-trayeur selon la revendication 2 en combinaison avec le gobelet trayeur, dans lequel,
le gobelet trayeur comprenant une coque qui définit un espace de pulsation entre un intérieur de la coque et un extérieur du manchon-trayeur, la coque ayant un raccordement de conduite vide,
le manchon-trayeur est monté dans la coque avec la coque en appui contre la tête et la partie de sortie,
le cylindre est effilé sur la longueur totale (L) de la tête vers la partie de sortie,
et la tête et le cylindre sont chacun exempt d'orifice de ventilation.

9. Manchon-trayeur selon la revendication 1, dans lequel, lorsqu'il est situé dans la forme en coupe transversale polygonale du cylindre supérieur, le trayon remplit l'espace interne pendant toutes les phases de pulsation (a, b, c, d) lors de l'opération de traite avec la surface interne (25) scellée contre le trayon.

10. Manchon-trayeur selon la revendication 1, dans lequel, à l'état relâché du manchon, le cylindre supérieur et le cylindre inférieur, transversalement vers l'axe longitudinal (x), présentent la même forme en coupe transversale polygonale composée des parties d'angle et des parois latérales, chaque partie d'angle reliant deux desdites parois latérales, chaque partie d'angle et chaque paroi latérale ayant une surface extérieure et la surface interne opposée, la surface interne de chaque partie d'angle étant la première courbure concave arquée ouverte sur l'espace interne.

11. Manchon-trayeur selon la revendication 2, dans lequel une longueur combinée de la longueur de tête (Lh) et de la première longueur du cylindre supérieur, à l'état relâché, est dans une plage de 60 à 100 mm.

12. Manchon-trayeur selon la revendication 11, dans lequel,
la seconde longueur (L2) du cylindre inférieur est au moins 30 % de la longueur totale du cylindre (L).

13. Manchon-trayeur selon la revendication 1, dans lequel,
la seconde longueur (L2) du cylindre inférieur est au moins 30 % de la longueur totale du cylindre (L).

14. Manchon-trayeur selon la revendication 13, dans lequel,
la seconde longueur (L2) du cylindre inférieur ne dépasse pas 45 % de la longueur totale du cylindre (L).

15. Manchon-trayeur selon la revendication 13, dans lequel,
la seconde longueur (L2) du cylindre inférieur ne dépasse pas 40 % de la longueur totale du cylindre (L).
